# EUROPÄISCHE PATENTANMELDUNG

(11) **EP 2 058 549 A1**
(43) Veröffentlichungstag der Anmeldung: **13.05.2009**
(21) Anmeldenummer: 08018932.7
(22) Anmeldetag: 30.10.2008
(51) Int. Cl.: F16F 13/14

(54) **Hülsengummifeder mit hydraulischer Dämpfung**

(30) Priorität: 08.11.2007 DE 102007053111
(71) Anmelder: Jörn GmbH, 71336 Waiblingen (DE)
(72) Erfinder: Zawadzki, Bernd, 71409 Schwaikheim (DE); Seck, Gerhard, 73630 Remshalden (DE); Sprang, Rüdiger, 53125 Bonn (DE)
(74) Vertreter: Liebl, Thomas

(57) **Zusammenfassung**

Die Erfindung betrifft eine elastische Lagerbuchse mit hydraulischer Dämpfung mit einem Innenteil (2) zur Verbindung mit einem ersten zu lagernden Bauteil und einem Außenrohr (3) und mit einem Elastomerkörper (4) zwischen dem Innenteil (2) und dem Außenrohr (3) und mit zwei, radial gegenüberliegenden, mit hydraulischer Flüssigkeit gefüllten Arbeitskammern (5, 6), die durch zugeordnete Aussparungen (25) im Außenrohr (3) und im Elastomerkörper (4) sowie durch eine flüssigkeitsdicht abschließende Außenhülse (7) gebildet sind, sowie mit einem Strömungskanal (10) zur Strömungsverbindung der zwei Arbeitskammern (5, 6). Erfindungsgemäß ist der Strömungskanal (10) im Bereich der Aussparungen (25) durch mindestens eine Trennwand von einer zugeordneten Arbeitskammer (5, 6) abgeteilt und die Trennwand oder die Trennwände sind entlang der Aussparungen durch kragenförmige Durchstellungen des Außenrohrs (3) als in Elastomermaterial eingebettete Kragenteile (36) gebildet. Zudem weist wenigstens eines der Kragenteile (36) eine Längsausnehmung (37) auf, in der die zugeordnete Trennwand in einer zusätzlichen Funktion durch einen nachgiebigen Elastomersteg als Entkopplungsmembran (38) gebildet ist.

## Beschreibung

Die Erfindung betrifft eine Hülsengummifeder mit hydraulischer Dämpfung insbesondere für Lagerungen in einem Kraftfahrzeug oder als Maschinenlagerung nach dem Oberbegriff des Anspruchs 1.

Bekannte gattungsgemäße Hülsengummifedern als elastische Lagerbuchsen mit hydraulischer Dämpfung (DE 36 17 787 C2; DE 36 31 620 A1) bestehen aus einem Innenteil zur Verbindung mit einem ersten zu lagernden Bauteil und einem Außenrohr sowie aus einem Elastomerkörper zwischen dem Innenteil und dem Außenrohr. Zudem weisen solche Lagerbuchsen zwei radial gegenüberliegende, mit hydraulischer Flüssigkeit gefüllte Arbeitskammern auf, die durch zugeordnete Aussparungen im Außenrohr und im Elastomerkörper sowie durch eine flüssigkeitsdicht abschließende Außenhülse gebildet sind. Die zwei Arbeitskammern sind durch einen Strömungskanal miteinander verbunden.

Bei einer solchen elastischen Lagerbuchse mit hydraulischer Dämpfung wird bei radialer oszilierender Ein- und Ausfederung eine Änderung des Volumens mit einer Änderung des Drucks in den Arbeitskammern erzeugt, die von der Einfederung und der Beulfähigkeit oder sog. Volumensteifigkeit der Kammerbegrenzungen abhängig ist. Durch eine solche Volumenänderung wird Flüssigkeit von der einen Arbeitskammer durch den Strömungskanal in die andere Arbeitskammer und zurück verdrängt. Das gewünschte Dämpfungs-oder Tilgungsverhalten ergibt sich durch die Eigenschwingung der Flüssigkeitsmasse im Strömungskanal, welche gegen die Volumensteifigkeit schwingt. Das Dämpfungsverhalten ist dabei abhängig von Eintritts-, Umlenk-und Reibungsverlusten im Strömungskanal. Erzielbar sind mechanische Verlustwinkel bis zu 60°, je nach Amplitude im Frequenzbereich von im allgemeinen größer/gleich 5 Hz. Hohe Verlustwinkel bei gewünscht niedrigen Frequenzen sind bauartbedingt regelmäßig dann erreichbar, wenn die schwingende Flüssigkeitsmasse im Strömungskanal möglichst groß ist.

Der Tilger- beziehungsweise Dämpfungseffekt dient im Allgemeinen der Minimierung von Schwingungsamplituden mechanischer Schwingungen etwa größer als 0,5 mm. Es erfolgt hier eine Erhöhung der dynamischen Steifigkeit im gewünschten Frequenzbereich, zum Beispiel zwischen 5 und 10 Hz. Da bei höheren Frequenzen aufgrund der zunehmenden Strömungsverluste, der Strömungskanal hydraulisch praktisch verschlossen ist, erhöht sich allerdings die Gesamtsteifigkeit des Lagers um den Anteil der Volumensteifigkeit und verläuft über den weiteren Frequenzbereich auf diesem Versteifungsniveau weiter.

Aufgrund dieser Verhärtung erhält man jedoch in einem höher frequenten Bereich (etwa größer 60 Hz) eine unerwünscht starke mechanische Kopplung zwischen den zu lagernden Bauteilen verbunden mit einer unerwünscht starken Geräuschübertragung, insbesondere durch die Übertragung von Schwingungen mit Amplituden kleiner 0,5 mm, die bei einem Einsatz der Lagerbuchse in einem Fahrzeug, zum Beispiel durch Schwingungen der zweiten Motorordnung hervorgerufen werden. Zur Reduzierung dieser unerwünschten Effekte benötigt man im vorstehenden Frequenzbereich eher ein "weiches" Lager und somit eine Absenkung der dynamischen Steifigkeit.

Hierzu sind bereits Lösungen bekannt: bei herkömmlichen allgemein bekannten Zweikammer-Hydrolagern mit vertikaler Achse, wie sie beispielsweise für Lagerungen von Brennkraftmaschinen in Personenkraftfahrzeugen verwendet werden, wird die vorstehende Absenkung der dynamischen Steifigkeit dadurch erreicht, dass an einem starren Kanalträger, der die beiden Arbeitskammern trennt, ein Freiraum als Käfigraum vorgesehen ist, in dem ein zusätzliches Bauteil als "Lose" in Form einer Entkopplungsmembran innerhalb eines konstruktiv vorgegebenen Freiwegs gegen eine obere und untere Begrenzung bewegbar ist.

Bei der Aufbringung von Belastungsbewegungen mit kleinen Amplituden wirkt die verdrängte Hydraulikflüssigkeit zunächst auf die leicht bewegliche Entkopplungsmembran, die gegenüber Kanalöffnungen einen relativ größeren Querschnitt aufweist. Die Entkopplungsmembran beweg sich daher in vertikaler Richtung innerhalb ihres Freiraums bei relativ kleinen Bewegungsamplituden, insbesondere auch in den höherfrequenten Bereichen etwa größer 60 Hz, so dass damit die Volumensteifigkeit des Lagers im Vergleich zu einer Ausführung ohne Entkopplungsmembran reduziert ist und noch ein erwünscht weiches Lager ohne Lagerverhärtung zur Verfügung steht.

Erst bei Aufbringen von Bewegungen größerer Amplituden legt sich die Entkopplungsmembran an die vorgegebene Abstützung innerhalb des Kanalträgers an und die Kammerflüssigkeit wird in den Strömungskanal verdrängt, gerät in Eigenschwingung und der Tilgereffekt setzt ein.

Bei den gattungsgemäßen Hülsengummifedern mit hydraulischer Dämpfung, steht bauraumbedingt im Gegensatz zum vorbeschriebenen Stand der Technik kein Platz für den Einsatz von zusätzlichen Entkopplungsanordnungen mit innerhalb vorgegebener Freiwege lose beweglichen Entkopplungsmembranen zur Verfügung. Zudem würden solche Anordnungen zu einem großvolumigen, komplizierten und teuren Lageraufbau einer Hülsengummifeder mit hydraulischer Dämpfung führen.

Aufgabe der Erfindung ist es eine gattungsgemäße elastische Hülsengummifeder mit hydraulischer Dämpfung so weiterzubilden, dass sie bei einfachem Aufbau eine gute Funktion mit Amplitudenentkopplung aufweist.

Diese Aufgabe wird mit den Merkmalen des Anspruchs 1 gelöst.

Gemäß Anspruch 1 ist der Strömungskanal im Bereich zumindest einer Aussparung durch wenigstens eine Trennwand von der zugeordneten Arbeitskammer abgeteilt, wobei in der Trennwand durch einen nachgiebigen Elastomersteg für eine Amplitudenentkopplung eine Entkopplungsmembran gebildet ist.

Bei der Aufbringung von Bewegungen mit kleinen Amplituden wirkt die Hydraulikflüssigkeit auf diese Entkopplungsmembran, wobei sich diese in Richtung Kanalinnenseite relativ leicht verformt, so dass die Volumensteifigkeit insgesamt reduziert ist und Bewegungen mit kleinen Amplituden auch bei höheren Frequenzen nicht gedämpft werden. Zweckmäßig wird die Federsteifigkeit so abgestimmt, dass die Eigenschwingung der Entkopplungsmembran in einem gewünschten Frequenzbereich zu einer Absenkung der dynamischen Steifigkeit der Hülsengummifeder beiträgt. Dadurch wird hier eine prinzipiell gleiche Amplitudenentkopplung erreicht, wie im vorbeschriebenen Stand der Technik mit dem zusätzlichen Bauteil als "Lose", wobei jedoch hier ein solches aufwändiges zusätzliches Bauteil vorteilhaft nicht erforderlich ist, da die Trennwand in einer zusätzlichen Funktion als Entkopplungsmembran wirkt.

Die Geometrie sowie die Flexibilität der Entkopplungsmembran sind so zu wählen, dass bei größeren Amplituden die Spannung in der Entkopplungsmembran wieder so groß ist, dass sie einer weiteren Verformung ausreichend entgegenwirkt. Eine solche Amplitudenentkopplung kann bei beliebigen Kanalführungen und Kanalgeometrien verwendet werden, wenn eine entsprechende Trennwand vorliegt.

Nach Anspruch 2 ist die wenigstens eine Trennwand entlang der Aussparung durch eine kragenförmige Durchstellung des Außenrohrs als in Elastomermaterial eingebettetes Kragenteil gebildet, um die Trennwand bei erforderlicher Stabilität möglichst dünn zu gestalten. Die Entkopplungsmembran ist als nachgiebiger Elastomersteg in einer Längsausnehmung des Kragenteils gebildet.

Längsausnehmungen und Entkopplungsmembrane können je nach den Gegebenheiten und Erfordernissen lediglich in einem oder auch in weiteren Kragenabschnitten zugeordnet zu den Arbeitskammern vorgesehen sein, wobei auch in einem einzigen Kragenabschnitt zwei oder mehr Längsausnehmungen angebracht sein können, wo dann entsprechende Entkopplungsmembrane gebildet sind.

Zudem ist gemäß Anspruch 2 auf dem Außenrohr radial außen eine Elastomerschicht aufgebracht, in der in Teilbereichen der wenigstens eine Strömungskanal mit seinem Kanalboden und den Kanalseitenwänden eingeformt ist, wobei der Strömungskanal radial außen von der Außenhülse flüssigkeitsdicht begrenzt ist.

In einer einfacheren Ausführungsform nach Anspruch 3 ist der Strömungskanal als Einzelkanal ausgeführt, der die Arbeitskammern direkt verbindet. Dazu ist der Einzelkanal mit der ersten Arbeitskammer über eine seitliche Kammerausgangsöffnung verbunden, läuft neben der ersten Arbeitskammer abgeteilt durch die Trennwand her und mündet im weiteren Verlauf in die zweite Arbeitskammer ein, wobei das durchgestellte Kragenteil insbesondere als Kragenringabschnitt des Außenrohres gebildet ist.

In einer weiteren Ausführungsform nach Anspruch 4, insbesondere für ein möglichst großes Flüssigkeitsvolumen im Verbund der Arbeitskammern und dem Strömungskanal besteht dieser aus zwei Teilkanälen, von denen jeweils ein Kanalteil seitlich neben den Arbeitskammern in einer Querebene verläuft dergestalt, dass der erste Teilkanal mit der ersten Arbeitskammer über eine erste seitliche Kammerausgangsöffnung verbunden ist, neben der ersten Arbeitskammer und der zweiten Arbeitskammer in Umfangsrichtung vorbeiläuft und in eine Übergangskonturkammer einmündet. Entsprechend ist der zweite Teilkanal mit der zweiten Arbeitskammer über eine zweite seitliche Kammerausgangsöffnung verbunden und läuft neben der zweiten Arbeitskammer und der ersten Arbeitskammer jeweils durch Trennwände abgetrennt in der entgegengesetzten Umfangsrichtung vorbei, wonach er ebenfalls in die Übergangskonturkammer einmündet. Über diese Übergangskonturkammer ist die Strömungsverbindung der axial gegenüberliegenden Teilkanäle hergestellt.

Das Außenrohr ist dabei als Käfigteil ausgebildet ist, mit jeweils einem stirnseitig umlaufend geschlossenen Stützringteil und mit zwei radial gegenüberliegenden, die Stützringteile axial verbindenden Rohrstegteilen, wobei zwischen den Rohrstegteilen die Aussparungen für die Arbeitskammern mit den Kragenteilen gebildet sind, und auf den Rohrstegteilen jeweils Elastomerkörper angeordnet sind.

Die Lage und Anordnung der beiden Teilkanäle sind so gewählt, dass die axial äußeren Kanalseitenwände der Teilkanäle jeweils durch eine radial nach innen gerichtete, umlaufende Kanalseitenwandstufe eines zugeordneten Stützringteils des Außenrohrs gebildet sind.

Die Kanalböden der Teilkanäle sind jeweils einerseits durch einen axial an eine zugeordnete Kanalseitenwandstufe angrenzenden Rohrstegteilbereich und andererseits zwischen den Rohrstegteilen durch einen an die Kanalseitenwandstufe angrenzenden Ringbundabschnitt des Außenrohrs gebildet, wobei die axial inneren Kanalseitenwände der Teilkanäle einerseits im Bereich eines Rohrstegteils durch einen Elastomerkörperrandbereich und andererseits zwischen den Rohrstegteilen als Trennwände zu der jeweils angrenzenden Arbeitskammer durch ein nach radial außen am zugeordneten Ringbundabschnitt durchgestelltes stabiles Kragenteil als Kragenringabschnitt des Außenrohrs gebildet sind.

Wenigstens ein Kragenringabschnitt, bevorzugt ein Kragenringabschnitt, der an eine Kammerausgangsöffnung anschließt, weist hier die Längsausnehmung auf, in deren Bereich die Trennwand durch den nachgiebigen Elastomersteg in der Zusatzfunktion als Entkopplungsmembran mit den vorstehend genannten Vorteilen einer Amplitudenentkopplung gebildet ist.

Mit Anspruch 5 wird eine Auslegung der Amplitudenentkopplung dergestalt beansprucht, dass eine oder mehrere Längsausnehmungen in Verbindung mit einer jeweils zugeordneten Entkopplungsmembran so dimensioniert sind, dass bei kleinen Belastungsamplituden durch eine Membranverformung die Volumensteifigkeit und damit die Dämpfung reduziert werden, wobei die Federsteifigkeit so abstimmbar ist, dass die Eigenschwingung der Entkopplungsmembran in einem vorgegebenen Frequenzbereich zur Absenkung der dynamischen Steifigkeit beiträgt und dass bei größeren Amplituden die Spannung in der Entkopplungsmembran einer weiteren Membranverformung entgegenwirkt und damit eine Dämpfungsfunktion in abgestimmter Größe zur Verfügung steht.

Vorteilhaft wird nach Anspruch 6 das Außenrohr als einteiliges materialeinheitliches Käfigrohrteil hergestellt, wobei je nach den Gegebenheiten die Herstellung als bearbeitetes Blechrohrteil oder als aus Kunststoff oder Metallmaterial gegossenes Käfigrohrteil zweckmäßig ist.

Mit der Maßnahme nach Anspruch 7 kann ein Elastomerkörper eine Vorspannung ohne unerwünschte Verformungen an der Außenhülse, insbesondere an deren kreisförmigen Stützringteilen, aufgebracht werden.

Bei einem bevorzugten Einbau nach Anspruch 8, beispielsweise als Aggregatlager oder Fahrerhauslager, wird die Lagerbuchse in ein Aufnahmeauge des zweiten zu lagernden Bauteils, beispielsweise eines Fahrerhauses eines Lkw, mit etwa horizontaler Buchsenachse und vertikal übereinanderliegenden Arbeitskammern eingepresst. Eine so eingebaute Lagerbuchse ist dann für eine gedämpfte elastische Abstützung vertikaler Belastungen geeignet.

In einer weiteren Ausgestaltung nach Anspruch 9 sind am Innenteil mit Elastomermaterial überzogene Anschläge angeformt, die radial in die Arbeitskammern unter Berücksichtigung eines freien Federwegs einragen. Bei starken Ein- oder Ausfederungen kommen diese Anschläge an der Innenseite der Außenhülse zur Anlage und stützen sich darüber im Aufnahmeauge ab. Zudem ist für eine gute Tragfunktion das Innenteil etwa entsprechend einem Konuslager im Querschnitt nach unten konisch verjüngt ausgebildet. Zudem ist das Innenteil aus Kunststoff mit einer zentralen Bohrung zur Aufnahme einer Schwenkachse hergestellt. Ein solches Lager ist unter anderem gut geeignet zur Abstützung des Fahrerhauses eines Lkw.

Anhand einer Zeichnung wird die Erfindung näher erläutert.

### Es zeigen:

- Fig. 1: einen Querschnitt durch eine Hülsengummifeder mit hydraulischer Dämpfung in einer Ausführungsform mit gegenüberliegenden Teilkanälen entlang der Linie A-A aus Fig. 2,

- Fig. 2: einen Längsschnitt durch die Hülsengummifeder nach Fig. 1,
- Fig. 3: eine perspektivische Ansicht der Hülsengummifeder nach Fig. 1,
- Fig. 4: eine perspektivische Ansicht eines Außenrohrs als einteiliges Käfigteil der Hülsengummifeder nach Fig. 1,
- Fig. 5: einen vergrößerten Ausschnitt aus Fig. 4 im Bereich eines Kragenteils, und
- Fig. 6: eine vergrößerte Draufsicht auf den Bereich B von Fig. 3,
- Fig. 7: eine perspektivische Ansicht einer Hülsengummifeder in einer Ausführungsform mit einem Einzelkanal,
- Fig. 8: eine Draufsicht auf den Bereich der oberen Arbeitskammer der Hülsengummifeder nach Fig. 7, und
- Fig. 9: eine schematische Darstellung in einer planen Abwicklung der Arbeitskammern und des Einzelkanals.

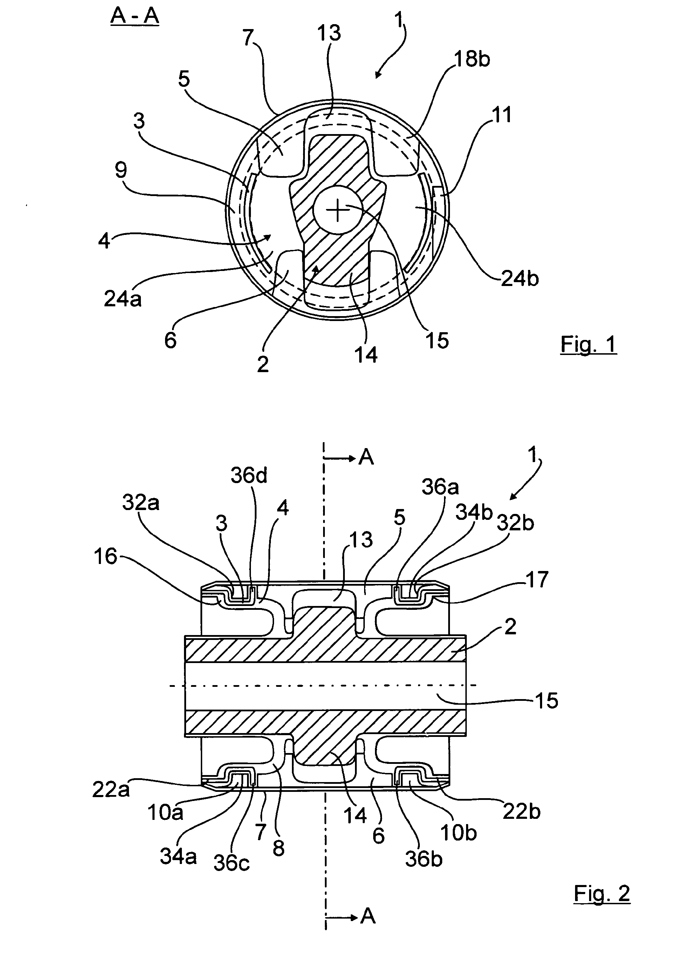

Die Fig. 1 bis 6 betreffen eine Hülsengummifeder als elastische Lagerbuchse einer Ausführungsform mit gegenüberliegenden Teilkanälen 10a, 10b. Wie aus den Fig. 1 bis 3 ersichtlich ist besteht die Hülsengummifeder 1 aus einem Innenteil 2, einem Außenrohr 3 und einem Elastomerkörper 4 zwischen dem Innenteil 2 und dem Außenrohr 3.

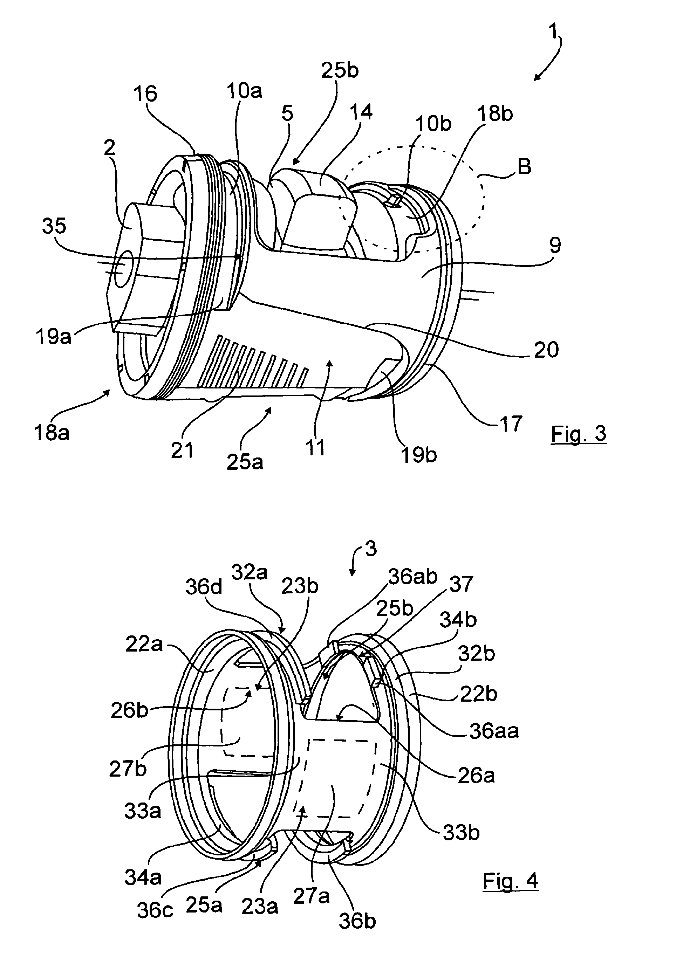

Zudem sind zwei radial gegenüberliegende, mit hydraulischer Flüssigkeit gefüllte Arbeitskammern ausgebildet (obere Arbeitskammer 5 und untere Arbeitskammer 6), die durch zugeordnete Aussparungen 25a, 25b im Außenrohr 3 sowie im Elastomerkörper 4 und durch eine flüssigkeitsdicht abschließende Außenhülse 7 hergestellt sind. Wie aus den Fig. 1 und 2 ersichtlich, sind damit die Arbeitskammern 5, 6 bezüglich des Elastomermaterials an den jeweiligen Kammerböden von den beidseitigen stark dimensionierten Elastomerblöcken und in den Seitenbereichen von zur Lagermitte eingezogenen dünnwandigeren Elastomerwänden 8 begrenzt. Bedingt durch die Ausnehmungen 25a, 25b am Außenrohr 3 im Bereich der Arbeitskammern 5, 6 sind in Fig. 1 lediglich die gegenüberliegenden Rohrstegteile 23a, 23b des Außenrohrs 3 und entsprechend in Fig. 2 nur die eingeformten umlaufenden Stützringteile 22a, 22b des Außenrohrs 3 sichtbar, wie dies näher in Verbindung mit Fig. 4 dargestellt und beschrieben ist.

Auf dem Außenrohr 3 ist radial außen eine Elastomerschicht 9 aufgebracht, in der ein Strömungskanal 10 mit seinen beiden Teilkanälen 10a, 10b sowie eine Übergangskonturkammer 11 eingeformt sind, wobei die Teilkanäle 10a, 10b und die Übergangskonturkammer 11 radial außen von der Außenhülse 7 flüssigkeitsdicht begrenzt sind. Die konkrete Anordnung des Strömungskanals mit seinen Teilkanälen 10a, 10b wird weiter unten detailliert beschrieben.

Am Innenteil 2 sind in einem axial mittleren Bereich gegenüberliegende, mit Elastomermaterial 13 überzogene Anschläge 14 angeformt, die jeweils radial in die Arbeitskammern 5, 6 einragen. Das Innenteil 2 ist im Querschnitt nach unten konisch verjüngt ausgebildet. Es ist aus Kunststoff hergestellt mit einer zentralen Bohrung 15 zur Aufnahme einer metallischen Schwenkachse.

In Fig. 3 ist eine perspektivische Ansicht der Hülsengummifeder 1, jedoch ohne die Außenhülse 7 gezeigt. Es sind hier deutlich das Innenteil 2, die obere Arbeitskammer 5 mit dem oberen Anschlag 14, sowie die stirnseitig umlaufenden Ringbereiche 16 und 17 mit den aus Elastomermaterial geformten Dichtlippen für die Außenhülse 7 erkennbar. Zudem ist die Elastomerschicht 9 zu ersehen, in die die Teilkanäle 10a, 10b und die Übergangskonturkammer 11 eingeformt sind.

Die Teilkanäle 10a und 10b verlaufen jeweils seitlich neben den Arbeitskammern 5 und 6. Dabei ist der Teilkanal 10b mit der oberen Arbeitskammer 5 über eine seitliche Kammerausgangsöffnung 18b verbunden. Von dort läuft der Teilkanal 10b an der oberen Arbeitskammer 5 und der unteren Arbeitskammer 6 in Umfangsrichtung vorbei und mündet an der Einmündung 19b in die Übergangskonturkammer 11.

Entsprechend beginnt der andere Teilkanal 10a an einer (in Fig. 3 nicht zu ersehenden) Kammerausgangsöffnung 18a der unteren Arbeitskammer 6 und verläuft neben der unteren Arbeitskammer 6 und der oberen Arbeitskammer 5 in der entgegengesetzten Umfangsrichtung bis zur Einmündung 19a in die Überganskonturkammer 11. In der Übergangskonturkammer 11 ist die Strömungsverbindung zwischen den Teilkanälen 10a, 10b beziehungsweise deren Einmündungen 19a, 19b hergestellt.

Die Übergangskonturkammer 11 ist teilweise als Zylinderabschnitt ausgebildet mit einer vertikalstehenden Abschnittsfläche, wie aus Fig. 1 ersichtlich. Die obere Begrenzung 20 der Stromführungskontur hat einen strömungsoptimierten Kurvenverlauf zwischen den Einmündungen 19a und 19b, wobei zusätzlich im unteren Bereich der Übergangskonturkammer 11 unterhalb und seitlich zur Einmündung 19a vertikal ausgerichtete Längslamellen 21 angeformt, deren obere Verbindungslinie einer unteren Begrenzung der Stromführungskontur etwa parallel mitlaufend mit der oberen Begrenzung 20 entspricht.

In Fig. 4 ist das Außenrohr 3 als einteiliges Käfigteil, vorzugsweise aus Metall, gezeigt mit stirnseitig umlaufend geschlossenen Stützringteilen 22a, 22b und mit zwei radial gegenüberliegenden die Stützringteile 22a und 22b axial verbindenden Rohrstegteilen 23a, 23b. Die Stützringteile sind radial außen bei der fertig hergestellten Lagerbuchse zur Ausbildung der stirnseitigen Ringbereiche 16, 17 und der Dichtlippen mit Elastomermaterial überzogen. Die Rohrstegteile 23a, 23b sind den beiden gegenüberliegenden Elastomerblöcken 24a, 24b des Elastomerkörpers 4 zugeordnet und dort eingeformt. Zwischen den Rohrstegteilen sind die Aussparungen 25a, 25b für die Arbeitskammern 5, 6 ausgespart.

In den Rohrstegteilen 23a, 23b können jeweils Fenster 26a, 26b (strichliert eingezeichnet) angebracht sein, welche mit Druckelementen in der Art von Fensterdeckeln 27a, 27b abgedeckt sein können, die vor der Montage der Außenhülse 7 radial vorstehen und die beim Aufstecken der Außenhülse 7 unter Aufbringung einer Vorspannung im Elastomerkörper 4 nach radial innen verlagert werden.

Konkret sind die axial äußeren Kanalseitenwände der Teilkanäle 10a, 10b jeweils durch eine radial nach innen gerichtete umlaufende Kanalseitenwandstufe 32a, 32b des jeweiligen Stützringteils 22a, 22b des Außenrohrs 3 gebildet.

Die Kanalböden der Teilkanäle 10a, 10b sind jeweils einerseits durch einen axial nach innen an die Kanalseitenwandstufen 32a, 32b angrenzenden Rohrstegteilbereich 33a, 33b und andererseits zwischen den Rohrstegteilen 23a, 23b durch einen Ringbundabschnitt 34a, 34b des Außenrohrs 3 gebildet, wobei die Ausbildung jeweils an den gegenüberliegenden Teilkanälen 10a, 10b gleich ist.

Die axial inneren Kanalseitenwände der Teilkanäle 10a, 10b sind im Bereich der Rohrstegteile 23a, 23b jeweils durch einen eingeformten Elastomerkörperrandbereich 35 der Gummischicht 9 gebildet (siehe Fig. 3). Dagegen sind jeweils zwischen den Rohrstegteilen 23a, 23b diese Kanalseitenwände in Umfangsrichtung als stegförmige Trennwände zu den jeweils angrenzenden Arbeitskammern 5, 6 ausgebildet und durch radial nach außen am zugeordneten Ringbundabschnitt 34a, 34b durchgestellte stabile elastomerummantelte Kragenteile als Kragenringabschnitte 36a, 36b, 36c, 36d des Außenrohrs 3 ausgeführt.

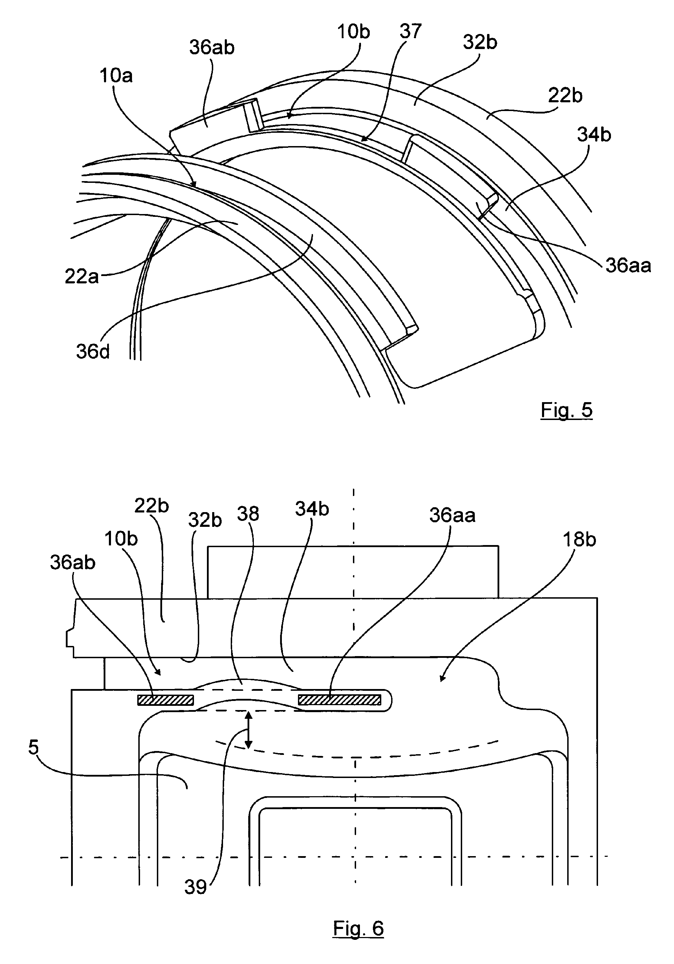

Der Kragenringabschnitt 36a weist hier eine Längsausnehmung 37 auf, so dass nur zwei beabstandete Kragenringabschnittteile 36aa, 36ab für eine beabstandete Versteifung der zugeordneten Trennwand zur Verfügung stehen. Die Kragenringabschnitte 36a, 36b, 36c, 36d sind mit Elastomermaterial überzogen beziehungsweise darin eingebettet, so dass sich, wie aus Fig. 6 ersichtlich, im Bereich der Längsausnehmung 37 zwischen den Kragenabschnittteilen 36aa, 36ab ein nachgiebiger Elastomersteg als Entkopplungsmembran 38 ergibt. Die Entkopplungsmembran 38 ist in gewünschter Weise dünnwandig und so dimensioniert, dass sie bei kleinen Belastungsamplituden (Pfeil 39) ohne starke Gegenkraft elastisch ausbeult, wie in Fig. 6 dargestellt, und damit die Lagersteifigkeit und Dämpfung reduziert werden. Bei größeren Amplituden nimmt die Spannung der Entkopplungsmembran 38 zu, so dass keine weitere Ausbeulung erfolgt und die Dämpfungsfunktion gegeben ist.

Längsausnehmungen 37 und Entkopplungsmembrane 38 können je nach den Gegebenheiten mit dem gleichen Ziel auch in einem weiteren oder allen Kragenringabschnitten 36a, 36b, 36c, 36d vorgesehen sein, wobei in einem Kragenringabschnitt auch zwei oder mehr Längsausnehmungen angebracht sein können. Gegebenenfalls kann auch eine Trennwand nur am freien Ende im Bereich einer Kammerausgangsöffnung 18b durch nur ein Kragenringabschnittteil 36aa verstärkt und stabilisiert sein, woran sich dann die Entkopplungsmembran 38 anschließt und mit dem anderen Ende stabil mit der Gummischicht 9 verbunden ist.

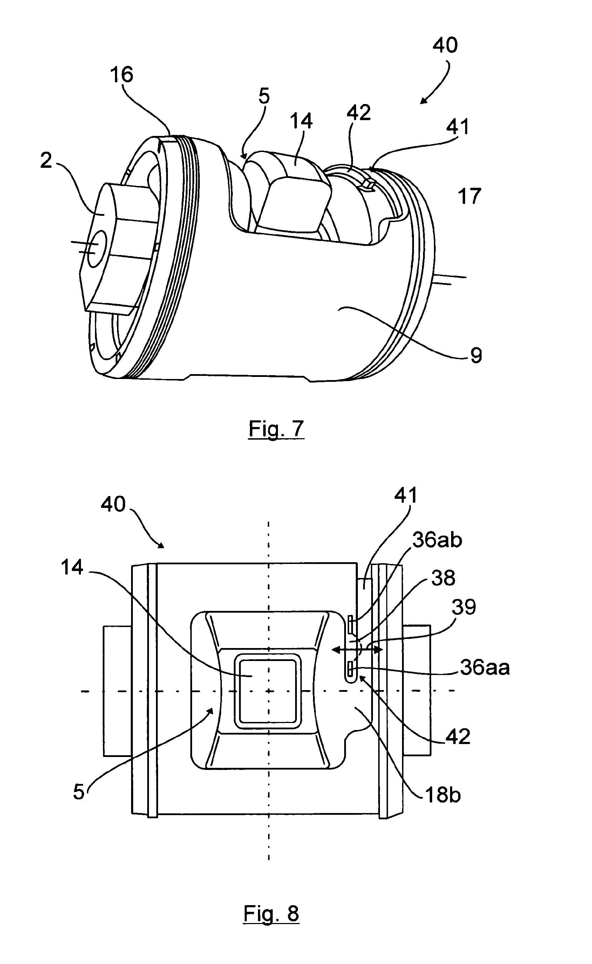

Die Fig. 7 bis 9 betreffen eine weitere Ausführungsform einer Hülsengummifeder 40 mit einem Einzelkanal 41 anstelle der Teilkanäle 10a, 10b mit der Übergangskonturkammer 11 der ersten Ausführungsform.

Wie aus den Fig. 7 bis 9 ersichtlich, verbindet der Einzelkanal 41 hier unmittelbar die obere und untere Arbeitskammer 5, 6. Der Bereich des Einzelkanals 41 entspricht dabei im Prinzip dem rechten Bereich aus den Fig. 3 bis 5 der ersten Ausführungsform, wobei der Einzelkanal 41 hier aber unmittelbar in die Arbeitskammer 6 und nicht in eine Übergangskonturkammer einmündet. Aufgrund des weitgehend gleichen Aufbaus in diesem Bereich zur ersten Ausführungsform werden auch hier die gleichen Bezugszeichen verwendet:

In Fig. 7 ist eine perspektivische Ansicht der Hülsengummifeder 40 ohne Außenhülse 7 gezeigt mit dem Innenteil 2 der oberen Arbeitskammer 5 mit dem oberen Anschlag 14 sowie die Stirnseite umlaufenden Ringbereiche 16 und 17 mit den aus Elastomermaterial geformten Dichtlippen für die Außenhülse 7. Zudem ist die Elastomerschicht 9 ersichtlich, in die der Einzelkanal 41 zumindest teilweise eingeformt ist.

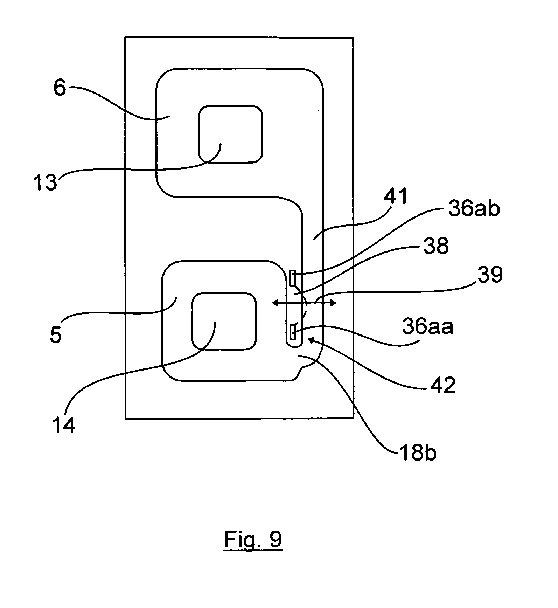

Die Lage und Anordnung der Bauelemente sind nochmals in der Draufsicht nach Fig. 8 auf dem Bereich der oberen Arbeitskammer 5 verdeutlicht. Daraus ist insbesondere ersichtlich, dass der Einzelkanal 41 mit der oberen Arbeitskammer 5 über die seitliche Kammerausgangsöffnung 18b verbunden ist und durch die Trennwand 42 von der Arbeitskammer 5 getrennt neben dieser her läuft und im weiteren Verlauf in die zweite Arbeitskammer 6 einmündet, wie dies aus der planar abgewickelten schematischen Darstellung nach Fig. 9 hervorgeht.

Die Trennwand 42 ist auch hier durch Kragenringabschnittteile 36aa und 36ab mit einer dazwischenliegenden Längsausnehmung gebildet, in der ein nachgiebiger Elastomersteg als Entkopplungsmembran 38 ausgebildet ist. Die Entkopplungsmembran 38 dient auch hier der Amplitudenentkopplung, wie dies in den Fig. 8 und 9 mit den Pfeilen 39 verdeutlicht ist.

## Patentansprüche

1. Hülsengummifeder mit hydraulischer Dämpfung
mit einem Innenteil (2) zur Verbindung mit einem ersten zu lagernden Bauteil und einem Außenrohr (3),
mit einem Elastomerkörper (4) zwischen dem Innenteil (2) und dem Außenrohr (3),
mit zwei, radial gegenüberliegenden, mit hydraulischer Flüssigkeit gefüllten Arbeitskammern (5, 6), die durch zugeordnete Aussparungen (25a, 25b) im Außenrohr (3) und im Elastomerkörper (4) sowie durch eine flüssigkeitsdicht abschließende Außenhülse (7) gebildet sind, und
mit wenigstens einem Strömungskanal (10a, 10b, 11; 41) zur Strömungsverbindung der zwei Arbeitskammern (5, 6),
**dadurch gekennzeichnet,**
**dass** der wenigstens eine Strömungskanal (10a, 10b; 41) im Bereich zumindest einer Aussparung (25a, 25b) durch wenigstens eine Trennwand von der zugeordneten Arbeitskammer (5, 6) abgeteilt ist, und
**dass** in der Trennwand durch einen nachgiebigen Elastomersteg für eine Amplitudenentkopplung eine Entkopplungsmembran (38) gebildet ist.

2. Hülsengummifeder nach Anspruch 1, **dadurch gekennzeichnet,**
**dass** die wenigstens eine Trennwand entlang der Aussparung (25a, 25b) durch eine kragenförmige Durchstellung des Außenrohrs (3) als in Elastomermaterial eingebettetes Kragenteil (36a, 36b, 36c, 36d) gebildet ist,
**dass** das Kragenteil (36a, 36b, 36c, 36d) eine Längsausnehmung (37) aufweist, in der die Trennwand durch einen nachgiebigen Elastomersteg als Entkopplungsmembran (38) gebildet ist, und
**dass** auf dem Außenrohr (3) radial außen eine Elastomerschicht (9) aufgebracht ist, in der in Teilbereichen der Strömungskanal (10a, 10b; 41) mit seinem Kanalboden und den Kanalseitenwänden eingeformt ist, wobei der Strömungskanal (10a, 10b; 41) radial außen von der Außenhülse (7) flüssigkeitsdicht begrenzt ist.

3. Hülsengummifeder nach Anspruch 1 oder 2, **dadurch gekennzeichnet, dass** der Strömungskanal als Einzelkanal (41) die Arbeitskammern (5, 6) direkt verbindet, wobei er mit der ersten Arbeitskammer (5) über eine seitliche Kammerausgangsöffnung (18b) verbunden ist, neben der ersten Arbeitskammer (5) abgeteilt durch die Trennwand (42) herläuft und im weiteren Verlauf in die zweite Arbeitskammer (6) einmündet.

4. Hülsengummifeder nach Anspruch 1 oder 2, **dadurch gekennzeichnet, dass** dass der Strömungskanal aus zwei Teilkanälen (10a, 10b) besteht, von denen jeweils ein Teilkanal (10a, 10b) seitlich neben den Arbeitskammern (5, 6) in einer Querebene verläuft, dergestalt
dass der erste Teilkanal (10b) mit der ersten Arbeitskammer (5) über eine erste seitliche Kammerausgangsöffnung (18b) verbunden ist, neben der ersten Arbeitskammer (5) und der zweiten Arbeitskammer (6) jeweils durch Trennwände abgetrennt in Umfangsrichtung vorbeiläuft und in eine Übergangskonturkammer (11) einmündet,
dass der zweite Teilkanal (10a) entsprechend mit der zweiten Arbeitskammer (6) über eine zweite seitliche Kammerausgangsöffnung (19a) verbunden ist, neben der zweiten Arbeitskammer (6) und der ersten Arbeitskammer (5) jeweils durch Trennwände abgetrennt in der entgegengesetzten Umfangsrichtung vorbeiläuft und ebenfalls in die Übergangskonturkammer (11) einmündet, über die in Buchsenlängsrichtung eine Strömungsverbindung zwischen dem ersten Teilkanal (10b) und dem zweiten Teilkanal (10a) hergestellt ist,
dass das Außenrohr (3) als Käfigteil ausgebildet ist, mit jeweils einem stirnseitig umlaufend geschlossenen Stützringteil (22a, 22b) und mit zwei radial gegenüberliegenden, die Stützringteile (22a, 22b) axial verbindenden Rohrstegteilen (23a, 23b), wobei zwischen den Rohrstegteilen (23a, 23b) die Aussparungen (25a, 25b) für die Arbeitskammern (5, 6) gebildet sind, und an den Rohrstegteilen (23a, 23b) jeweils Elastomerkörper (4; 24a, 24b) angeordnet sind,
dass die axial äußeren Kanalseitenwände der Teilkanäle (10a, 10b) jeweils durch eine radial nach innen gerichtete, umlaufende Kanalseitenwandstufe (32a, 32b) eines zugeordneten Stützringteils (22a, 22b) des Außenrohrs (3) gebildet sind,
dass die Kanalböden der Teilkanäle (10a, 10b) jeweils einerseits durch einen axial an eine zugeordnete Kanalseitenwandstufe (32a, 32b) angrenzenden Rohrstegteilbereich (33a, 33b) und andererseits zwischen den Rohrstegteilen (23a, 23b) durch einen an die Kanalseitenwandstufe (32a, 32b) angrenzenden Ringbundabschnitt (34a, 34b) des Außenrohrs (3) gebildet sind,
dass die axial inneren Kanalseitenwände der Teilkanäle (10a, 10b) einerseits im Bereich eines Rohrstegteils (23a, 23b) durch einen Elastomerkörperrandbereich (35) und andererseits zwischen den Rohrstegteilen (23a, 23b) als Trennwände zu der jeweils angrenzenden Arbeitskammer (5, 6) durch ein nach radial außen am zugeordneten Ringbundabschnitt (34a, 34b) durchgestelltes stabiles Kragenteil als Kragenringabschnitt (36a, 36b, 36c, 36d) des Außenrohrs (3) gebildet sind, und
dass wenigstens ein Kragenringabschnitt (36a), bevorzugt ein Kragenringabschnitt (36a), der an eine Kammerausgangsöffnung (18b) anschließt, die Längsausnehmung (37) aufweist, in deren Bereich die Trennwand durch den nachgiebigen Elastomersteg als Entkopplungsmembran (38) gebildet ist.

5. Elastische Lagerbuchse nach einem der Ansprüche 1 bis 4, **dadurch gekennzeichnet, dass** die Längsausnehmungen (37) in Verbindung mit der Entkopplungsmembran (38) so dimensioniert sind, dass bei kleinen Belastungsamplituden durch eine Membranverformung die Volumensteifigkeit und damit die Dämpfung reduziert werden, wobei die Federsteifigkeit so abstimmbar ist, dass die Eigenschwingung der Entkopplungsmembran (38) in einem vorgebbaren Frequenzbereich zur Absenkung der dynamischen Steifigkeit beiträgt, und
dass bei größeren Amplituden die Spannung in der Entkopplungsmembran (38) einer weiteren Membranverformung entgegengewirkt und damit die Dämpfungsfunktion in abgestimmter Größe zur Verfügung steht.

6. Elastische Lagerbuchse nach einem der Ansprüche 1 bis 5, **dadurch gekennzeichnet, dass** das Außenrohr (3) ein einteiliges materialeinheitliches Käfigrohrteil als bearbeitetes Blechrohrteil oder als aus Kunststoff oder Metallmaterial gegossenes Gießteil ist.

7. Elastisches Lager nach einem der Ansprüche 1 bis 6, **dadurch gekennzeichnet, dass** in den Rohrstegteilen (23a, 23b) jeweils wenigstens ein Fenster (26a, 26b) angebracht ist, dem wenigstens ein Druckelement (27a, 27b) zugeordnet ist, welches im Fensterbereich angeordnet ist und vor der Montage der Außenhülse (7) vorsteht, so dass beim Aufstecken der Außenhülse (7) das wenigstens eine Druckelement (27a, 27b) nach radial innen unter Aufbringen einer Vorspannung im Elastomerkörper (4; 24a, 24b) verlagert wird, ohne dabei die Stützringteile (22a, 22b) und/oder Rohrstegteile (23a, 23b) unzulässig zu verformen.

8. Elastische Lagerbuchse nach einem der Ansprüche 1 bis 7, **dadurch gekennzeichnet, dass** der Einbau der Hülsengummifeder (1; 40) durch Einpressen in ein Aufnahmeauge des zweiten zu lagernden Bauteils mit etwa horizontaler Buchsenachse und vertikal übereinanderliegenden Arbeitskammern (5, 6) erfolgt.

9. Elastische Lagerbuchse nach einem der Ansprüche 1 bis 8, **dadurch gekennzeichnet, dass** am Innenteil (2) mit Elastomermaterial (13) überzogene Anschläge (14) angeformt sind, die radial in die Arbeitskammern (5, 6) einragen,
**dass** das Innenteil (2) im Querschnitt nach unten konisch verjüngt ausgebildet ist, und
dass das Innenteil (2) aus Kunststoff mit einer zentralen Bohrung (15) zur Aufnahme einer Schwenkachse hergestellt ist.
